(19) Europäisches Patentamt
European Patent Office
Office européen des brevets

(11) EP 4 382 918 B1

(12) FASCICULE DE BREVET EUROPEEN

(45) Date de publication et mention
de la délivrance du brevet:
**23.07.2025 Bulletin 2025/30**

(21) Numéro de dépôt: **23214396.6**

(22) Date de dépôt: **05.12.2023**

(51) Classification Internationale des Brevets (IPC):
**G01Q 10/06** $^{(2010.01)}$ **G01Q 60/30** $^{(2010.01)}$

(52) Classification Coopérative des Brevets (CPC):
**G01Q 60/30; G01Q 10/06**

(54) **TRAITEMENT IN SITU DES MODES COUPLÉS DE CARACTÉRISATION FERROÉLECTRIQUE D'UN ÉCHANTILLON PIEZOÉLECTRIQUE**

IN-SITU-BEARBEITUNG VON GEKOPPELTEN MODI ZUR FERROELEKTRISCHEN CHARAKTERISIERUNG EINER PIEZOELEKTRISCHEN PROBE

IN SITU PROCESSING OF COUPLED MODES FOR FERROELECTRIC CHARACTERISATION OF A PIEZOELECTRIC SAMPLE

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **07.12.2022 FR 2212882**

(43) Date de publication de la demande:
**12.06.2024 Bulletin 2024/24**

(73) Titulaire: **Commissariat à l'Energie Atomique et aux Energies Alternatives
75015 Paris (FR)**

(72) Inventeurs:
• **VALLOIRE, Hugo
38054 GRENOBLE CEDEX (FR)**
• **BOROWIK, Lukasz
38054 GRENOBLE CEDEX (FR)**
• **MARIOLLE, Denis
38054 GRENOBLE CEDEX (FR)**

(74) Mandataire: **Atout PI Laplace
Immeuble Up On
25 Boulevard Romain Rolland
CS 40072
75685 Paris Cedex 14 (FR)**

(56) Documents cités:
• MIAO HONGCHEN ET AL: "Piezoelectricity and ferroelectricity of cellular polypropylene electrets films characterized by piezoresponse force microscopy", vol. 116, no. 6, 9 August 2014 (2014-08-09), 2 Huntington Quadrangle, Melville, NY 11747, pages 066820-1 - 066820-8, XP093013503, ISSN: 0021-8979, Retrieved from the Internet <URL:https://aip.scitation.org/doi/pdf/10.1063/1.4891395?casa_token=MEjDOMmFQ Z8AAAAA:21SWXIVTFvLSq20W4To81f1Q haXtRnVYIXbTr9q-NP3nwyP1Q2w7kXn77CR7IH s6iESIYCiI0Izj> DOI: 10.1063/1.4891395
• LIU YUANMING ET AL: "Thermal variation of piezoresponse in microscopically poled poly(vinylidene fluoride-trifluoroethylene) ferroelectric copolymers approaching Curie temperature", JOURNAL OF APPLIED PHYSICS, AMERICAN INSTITUTE OF PHYSICS, 2 HUNTINGTON QUADRANGLE, MELVILLE, NY 11747, vol. 110, no. 5, 1 September 2011 (2011-09-01), pages 52008 - 52008, XP012154189, ISSN: 0021-8979, [retrieved on 20110902], DOI: 10.1063/1.3623774

- **JESSE STEPHEN ET AL: "Switching spectroscopy piezoresponse force microscopy of ferroelectric materials", APPLIED PHYSICS LETTERS, AMERICAN INSTITUTE OF PHYSICS, 2 HUNTINGTON QUADRANGLE, MELVILLE, NY 11747, vol. 88, no. 6, 9 February 2006 (2006-02-09), pages 62908 - 062908, XP012082773, ISSN: 0003-6951, DOI: 10.1063/ 1.2172216**

**Description**

**Champ d'application**

La présente invention concerne le domaine de la caractérisation de matériaux en utilisant la technique de microscopie à force atomique. Plus particulièrement, l'invention concerne un procédé de caractérisation ferroélectrique d'un échantillon piézoélectrique avec un fonctionnement en mode « microscopie à force piézoélectrique avec une spectroscopie de commutation de la polarisation » SS-PFM (acronyme de l'expression en anglais Switching Spectroscopy Piezoresponse Force Microscopy).

**Problème soulevé**

Les couches minces en matériaux piézoélectriques et/ou ferroélectriques sont utilisées dans de nombreuses applications en microélectronique. On cite à titre d'exemple non limitatif les applications de dispositifs radiofréquences (filtres 4G, 5G, 6G), les mémoires émergentes pour les applications embarquées (FeRAM, FeFET) ou encore les technologies de capteurs/actionneurs miniaturisés (MEMS).

La mesure quantitative des propriétés ferroélectriques et piézoélectriques des couches minces présente un défi technique et expérimental. En effet, ce type de caractérisation est sensible à plusieurs artefacts de mesure tels que l'effet électrostatique induit par la mesure elle-même.

La microscopie à force piézoélectrique avec une spectroscopie de commutation de la polarisation SS-PFM présente un candidat prometteur pour réaliser la caractérisation des propriétés ferroélectriques et piézoélectriques. Pour un échantillon comprenant une couche en un matériau piézoélectrique et ferroélectrique, cette technique permet de déterminer localement sur une surface de l'échantillon :

-    La répartition et l'organisation des domaines ferroélectriques locaux,

-    L'influence des domaines ferroélectriques locaux sur les propriétés piézo/ferroélectriques macroscopiques de l'échantillon, et

-    Les mécanismes électromécaniques fondamentaux intervenant au sein du matériau.

La « microscopie à force piézoélectrique avec une spectroscopie de commutation de la polarisation » SS-PFM est un mode particulier de « la microscopie à force piézoélectrique » PFM (acronyme de l'expression en anglais Piezoresponse Force Microscopy). La « microscopie à force piézoélectrique » PFM est elle-même un mode de fonctionnement particulier de la « microscopie à force atomique » AFM (acronyme de l'expression en anglais Atomic Force Microscopy). Ainsi, pour bien comprendre le contexte de l'invention, nous allons commencer par expliquer d'une manière générale le fonctionnement de la microscopie à force atomique AFM et de la microscopie à force piézoélectrique PFM.

La microscopie à force atomique AFM est une technique de microscopie permettant de mesurer la topographie d'une surface d'un matériau avec une précision de l'ordre atomique. Un microscope à force atomique dispose d'une pointe fine solidaire avec un levier. L'ensemble du levier et de la pointe présentent des dimensions de l'ordre du micromètre. La pointe est mise en contact avec la surface de l'échantillon. La pointe est déplacée de manière à balayer la surface de l'échantillon. Une variation de topographie de la surface exerce une force sur la pointe induisant la déformation du levier. En mesurant cette déformation à l'aide d'un laser, on peut déduire le profil de la surface avec une résolution atomique et obtenir également des informations sur les propriétés élastiques et mécaniques de la surface.

La microscopie à force piézoélectrique PFM est un mode de fonctionnement particulier de la microscopie à force atomique AFM. Ce mode permet l'acquisition simultanée de la topographie et de la réponse piézoélectrique d'un échantillon piézoélectrique. Une couche conductrice est déposée sur une face de l'échantillon piézoélectrique pour réaliser une électrode inférieure. Lorsque le mode de fonctionnement PFM est choisi, un signal électrique alternatif de stimulation est injecté entre l'électrode inférieure et la pointe en contact avec la surface supérieure de l'échantillon. La pointe se comporte comme une électrode supérieure de l'ensemble pointe - couche piézoélectrique - électrode inférieure. Cela induit une réponse électromécanique locale de l'échantillon piézoélectrique. La réponse consiste en des déplacements latéraux et/ou verticaux proportionnellement aux caractéristiques ferroélectriques de l'échantillon et au signal injecté. Ces déplacements sont mesurés grâce à la réflexion d'un laser incident sur l'extrémité du levier vers une photodiode à quatre quadrants, par détection différentielle.

La microscopie à force piézoélectrique avec une spectroscopie de commutation de la polarisation SS-PFM est un mode particulier de « la microscopie à force piézoélectrique » PFM. La microscopie SS-PFM permet d'exploiter les caractéristiques piézoélectriques et ferroélectriques de l'échantillon avec plus de précision. En plus du premier signal électrique sinusoïdal habituellement utilisé en mode PFM, un signal créneau modulant un second signal périodique est appliqué entre la pointe et l'électrode inférieure. Nous allons décrire ce signal d'une manière plus détaillée dans la suite de la description. Cette combinaison de signaux permet de provoquer des commutations locales de la polarisation électrique locale de l'échantillon tout en mesurant la réponse électromécanique de l'échantillon. Les commutations permettent d'obtenir une courbe d'hystérésis locale pour chaque point balayé par la pointe.

L'ensemble constitué par le levier, la pointe, l'échantillon piézoélectrique et l'électrode forme un système mécanique local. Ce système mécanique présente une fréquence de résonance propre, notée $f_0$. La fréquence de résonance dépend des caractéristiques géométriques et des matériaux qui constituent chaque élément de l'ensemble, ainsi que de la force du contact entre la pointe et l'échantillon. Ainsi, deux modes de fonctionnement sont envisageables : un fonctionnement en résonance et un fonctionnement hors résonance.

D'une part, le fonctionnement en résonance consiste à utiliser un premier signal électrique sinusoïdal ayant une fréquence $f_1$ égale à la fréquence de résonance $f_0$ Cela permet de maximiser l'amplitude mesurée de la réponse électromécanique de l'échantillon. En effet, l'amplitude mesurée est multipliée par le facteur de qualité du pic de résonance, ayant pour ordre de grandeur 100. Ainsi, la sensibilité de la mesure et le rapport signal sur bruit sont améliorés. Cependant, la fréquence de résonance $f_0$ peut fluctuer avec les artefacts de mesure lors de la caractérisation. Ces fluctuations résultent à titre d'exemple de la variation de la pression appliquée par la pointe sur la surface de l'échantillon. Cette dernière peut varier à cause du changement de topographie de la surface de l'échantillon, de changement des propriétés mécaniques élastiques de l'échantillon, ou encore de changement d'interactions coulombiennes entre la pointe et l'échantillon. L'usure de la pointe peut aussi engendrer la dérive de la fréquence de résonance de l'ensemble. On note la nouvelle valeur de la fréquence de résonance $f_0$'. La fréquence du premier signal électrique sinusoïdal $f_1$ n'est plus alignée avec la nouvelle fréquence de résonance $f_0$'. Le système ne fonctionne plus en résonance. L'amplitude mesurée varie, sans que l'amplitude réelle du pic de résonance ne soit nécessairement modifiée. Il en résulte que le fonctionnement en résonance présente une forte dépendance aux dérives de la fréquence de résonance.

D'autre part, le fonctionnement hors résonance consiste à utiliser un premier signal électrique sinusoïdal ayant une fréquence $f_1$ sensiblement inférieure à la fréquence de résonance $f_0$. Ce mode présente l'avantage d'une mise en œuvre simple et permet d'avoir un signal faiblement dépendant d'artefacts de mesure (usure de la pointe, variation de la force de contact pointe - échantillon). L'inconvénient de ce mode de fonctionnement consiste en une sensibilité et un rapport signal sur bruit limités. Plus particulièrement, ce problème empêche les mesures pour des échantillons à faibles coefficients piézoélectriques.

Des solutions de caractérisation par « microscopie à force piézoélectrique avec une spectroscopie de commutation de la polarisation » SS-PFM avec maintien de fréquence ont été développées. Plus particulièrement, le couplage d'un système de « suivi de résonance à double fréquence » DFRT (acronyme de l'expression anglaise Dual Frequency Resonance Tracking) à un microscope à force atomique constitue une solution prometteuse dans le contexte préalablement décrit. Cependant, ce couplage présente des problèmes de compatibilité qui réduisent la fiabilité des résultats de mesures et qui augmentent considérablement la durée de procédé de caractérisation. En effet, la caractérisation SSPFM nécessite l'application d'une série de créneaux de tension électrique entre la pointe et une électrode inférieure de l'échantillon. Lors d'un front montant ou descendant pendant la transition d'un créneau à un autre, les fortes variations de ladite tension engendrent une variation brusque des forces électrostatiques subies par le levier. Cela induit une variation de la rigidité effective k* du levier. La variation de la rigidité effective induit un changement de la fréquence de résonance propre du système mécanique local formé par le levier, la pointe, l'échantillon piézoélectrique et l'électrode. Les dispositifs de type DFRT disponibles ne sont pas assez rapides pour réagir face à cette variation brusque de la fréquence de résonance. Ainsi, la fréquence $f_1$ de caractérisation n'est pas toujours égale à la fréquence de résonance $f_0$ pendant une période transitoire à chaque front descendant/ou montant de la série de créneaux de tension électrique. Cette période transitoire où les résultats sont faussés peut atteindre les 50ms pour chaque créneau. Il en résulte une dégradation de la précision de la mesure du mode couplé SSPFM et DFRT et une perte de sensibilité du système de caractérisation qui ne fonctionne pas vraiment toujours dans son fonctionnement en résonance.

### Art antérieur/ Restrictions de l'état de l'art

Les techniques existantes de « microscopie à force piézoélectrique avec une spectroscopie de commutation de la polarisation » SS-PFM couplé avec DFRT proposent d'allonger la durée d'acquisition pour chaque créneau de manière à rendre la période transitoire où le fonctionnement est hors résonance négligeable. Cela augmente considérablement la durée de caractérisation par point qui peut atteindre dans ce cas 2 à 3 minutes par points. Ainsi, pour rester dans des temps de caractérisation acceptable par échantillon, l'Homme du métier est obligé de réduire la résolution de la caractérisation (moins de points de mesures) où travailler sur des échantillons de surfaces limitées. De plus, l'allongement de la durée d'acquisition engendre une augmentation considérable de la taille des fichiers de mesures ce qui alourdit le post-traitement des résultats de la caractérisation.

Un dispositif SS-PFM couplé avec DFRT est connu de l'article "Piezoelectricity and ferroelectricity of cellular polypropylene electrets films characterized by piezoresponse force microscopy", MIAO HONGCHEN ET AL, JOURNAL OF APPLIED PHYSICS, vol. 116, no. 6, pages 066820-1 à 066820-8.

**Réponse au problème et apport solution**

Pour pallier les limitations des solutions existantes en ce qui concerne la dégradation de la précision des mesures suite à des transitions rapides du signal de stimulation lors d'une caractérisation SSPFM, l'invention propose un dispositif expérimental de caractérisation configuré pour :

- désactiver l'acquisition des données de mesure pendant le régime transitoire résultant des transitions rapides correspondant à un fonctionnement hors résonance ;

- activer l'acquisition des données de mesure une fois la fréquence de travail du dispositif expérimental de caractérisation est stabilisée à une valeur sensiblement égale à la fréquence de résonance propre $f_0$.

Le dispositif selon l'invention permet alors d'exclure l'acquisition du signal de mesure lors d'un fonctionnement temporaire hors résonance en temps réel. Cela permet d'améliorer la qualité des données acquises. Cela permet de réduire la durée des créneaux de lecture pour chaque point et ainsi améliorer la résolution spatiale de caractérisation à durée égale par rapport à l'état de l'art.

Avantageusement, le dispositif selon l'invention permet de détecter les phénomènes de « commutation arrière ferroélectrique » (traduction du terme anglais Ferroelectric Back-Switching) propres à certains matériaux ferroélectriques.

Avantageusement, le dispositif selon l'invention permet d'arrêter l'acquisition pendant le déplacement de la pointe d'un point à un autre de la surface de l'échantillon de manière à supprimer les artéfacts résultant de ces déplacements.

**Résumé /Revendications**

Selon la revendication indépendante 1, l'invention a pour objet un dispositif de caractérisation d'un échantillon piézoélectrique ayant une électrode inférieure et une surface supérieure.

Selon un aspect particulier de l'invention, le calculateur est configuré pour déterminer une courbe d'hystérésis d'amplitude et/ou de phase associée au point à partir du signal de mesure lors d'une opération d'acquisition.

Selon un aspect particulier de l'invention, lorsque l'étage de détection de stabilité reçoit trois composantes spectrales du signal de mesure, associées au point, l'étage de détection de stabilité est configuré pour réaliser les opérations suivantes pour ledit point :

- mesurer la variation de la première fréquence au cours du temps ;
- activer l'opération d'acquisition par le calculateur lorsque la première fréquence est stabilisée à une valeur sensiblement égale à la fréquence de résonance.

Selon un aspect particulier de l'invention, l'étage de détection de stabilité est configuré pour réaliser, en outre, les opérations suivantes pour ledit point :

- mesurer la variation de l'amplitude du signal de mesure au cours du temps ;
- activer l'opération d'acquisition par le calculateur lorsque :

  ∘ la première fréquence est stabilisée à une valeur sensiblement égale à la fréquence de résonance ;
  o et la variation du signal de mesure est inférieure à un premier seuil prédéterminé.

Selon un aspect particulier de l'invention, l'étage de détection de stabilité est configuré pour, en outre, désactiver l'opération d'acquisition lorsque la pointe conductrice est écartée de la surface supérieure.

Selon l'invention, le générateur est configuré pour générer:

- un premier signal de redressement à une deuxième fréquence supérieure à la première fréquence ;
- un second signal de redressement à une troisième fréquence inférieure à la première fréquence ;

les deux signaux de redressement présentant respectivement une amplitude inférieure à celle du signal de caractérisation et étant superposées avec le signal de caractérisation ; et la deuxième fréquence et la troisième fréquence étant équidistantes de la première fréquence.

Selon un aspect particulier de l'invention, le signal de mesure comprend une première composante spectrale associée à la première fréquence, une deuxième composante spectrale associée à la deuxième fréquence et une troisième composante spectrale associée à la troisième fréquence ;

et dans lequel le circuit de commande comprend un premier filtre destiné à extraire la deuxième composante spectrale et un second filtre destiné à extraire la troisième composante spectrale.

Selon un aspect particulier de l'invention, le circuit de commande comprend un régulateur pour générer le signal de commande de manière à maintenir une égalité entre l'amplitude de la deuxième composante spectrale (et celle de la troisième composante spectrale) pendant le régime permanent suite au régime transitoire.

Selon un aspect particulier de l'invention, l'étage de détection de stabilité comprend un circuit diviseur configuré pour calculer la valeur absolue de la différence relative entre :

- d'une part l'amplitude de la deuxième composante spectrale ;
- et d'autre part l'amplitude de la troisième composante spectrale.

Selon un aspect particulier de l'invention, l'étage de détection de stabilité comprend en outre un circuit d'activation d'acquisition configuré pour :

- comparer la valeur absolue de la différence relative à un second seuil prédéterminé ;
- générer le signal d'activation d'acquisition vers le calculateur lorsque la valeur absolue de la différence relative est inférieure au second seuil prédéterminé.

## Description détaillée

D'autres caractéristiques et avantages de la présente invention apparaîtront mieux à la lecture de la description qui suit en relation aux dessins annexés suivants :

La figure 1 illustre un premier mode de réalisation du dispositif expérimental selon l'invention.

La figure 2a illustre un premier mode de réalisation de la variation de la première composante continue du signal de caractérisation selon l'invention.

La figure 2b illustre un zoom partiel sur le signal de caractérisation pendant une itération caractérisation selon l'invention.

La figure 3a illustre un schéma d'un circuit de suivi de résonance à double fréquence du dispositif expérimental selon l'invention.

La figure 3b illustre une analyse spectrale du signal mesuré à l'entrée du circuit de suivi de résonance à double fréquence du dispositif expérimental selon l'invention.

La figure 4a illustre un schéma d'un étage de détection de stabilité du dispositif expérimental selon l'invention.

La figure 4b illustre un premier exemple de la phase de stabilisation suite à une transition montante ou descendante de la tension appliquée entre la pointe et l'électrode inférieure de l'échantillon selon l'invention.

La figure 4c illustre le traitement réalisé par l'étage de détection de stabilité selon un premier mode de réalisation de l'invention.

La figure 5a illustre un deuxième mode de réalisation du dispositif expérimental selon l'invention.

La figure 5b illustre un deuxième exemple de la phase de stabilisation suite à une transition montante ou descendante de la tension appliquée entre la pointe et l'électrode inférieure de l'échantillon selon l'invention.

La figure 6 illustre un troisième mode de réalisation du dispositif expérimental selon l'invention.

La figure 7a illustre un exemple de la cartographie obtenu par un dispositif expérimental selon l'état de l'art.

La figure 7b illustre un exemple de la cartographie obtenu par un dispositif expérimental selon l'invention.

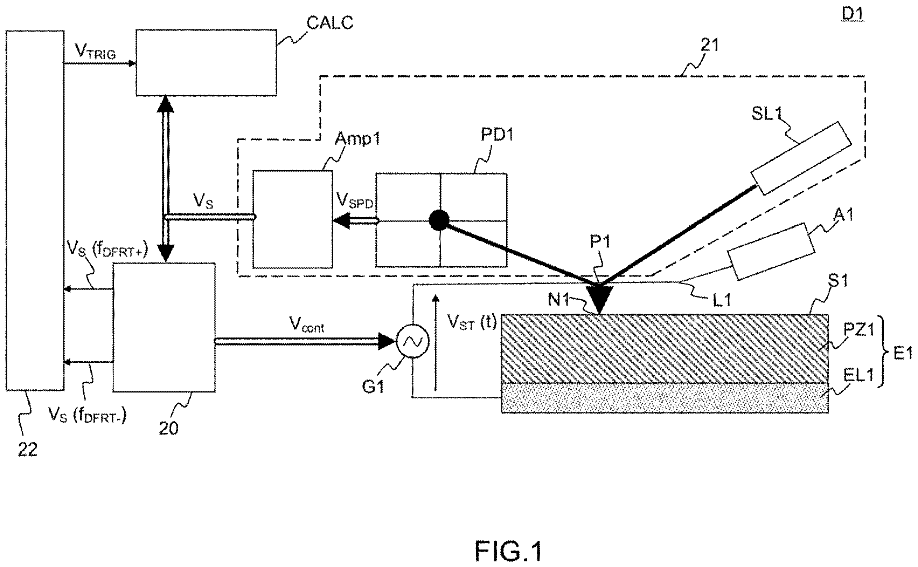

La figure 1 illustre un dispositif expérimental D1 selon l'invention. Le dispositif expérimental D1 est configuré pour mettre en œuvre un procédé de caractérisation d'un échantillon de test E1 selon un mode de réalisation de l'invention. Le dispositif expérimental D1 comprend une pointe conductrice P1 solidaire à une extrémité d'un levier L1, un actionneur A1 pour commander mécaniquement le levier L1, une source de laser SL1, un générateur de tension G1, une photodiode à quatre quadrants PD1, un étage amplificateur AMP1, un circuit de commande 20, un étage de détection de stabilité 22 et un calculateur CALC.

L'échantillon de test E1 comprend une couche mince PZ1 en un matériau piézoélectrique et une couche électriquement conductrice jouant le rôle d'une électrode inférieure EL1. L'électrode inférieure EL1 est une couche déposée sur une face de la couche PZ1. La face opposée à celle de l'électrode inférieure constitue la surface à caractériser de l'échantillon, elle est notée S1.

À titre d'exemple, la couche PZ1 présente une épaisseur comprise entre 5 nm et $10\mu$m. À titre d'exemple, la couche PZ1 est réalisée en titano-zirconates de plomb PZT, en titanate de baryum BaTiO3 ou tout autre matériau piézoélectrique et ferroélectrique. À titre d'exemple, l'électrode inférieure EL1 est réalisée en cuivre ou en aluminium ou en platine.

La pointe P1 est destinée à être mise en contact avec la surface S1. Le point de contact noté N1 est le point à caractériser. La source de laser SL1 est placée de manière à émettre un rayon laser sur la face supérieure de la pointe P1. Le rayon laser est réfléchi par la pointe P1 vers la photodiode à quatre quadrants PD1. Au repos, le rayon laser est réfléchi sur le centre de la photodiode à quatre quadrants. Il s'agit d'un calibrage pour déterminer la référence de la mesure.

Le générateur de tension G1 génère un signal électrique alternatif de stimulation noté $V_{ST}(t)$ entre l'électrode inférieure EL1 et la pointe P1 en contact avec la surface supérieure S1 de l'échantillon E1. Le signal $V_{ST}(t)$ est utilisé pour réaliser des phases de lecture et d'écriture qui seront détaillées ultérieurement. Le générateur G1 est commandé par le circuit de commande 20 par l'intermédiaire d'un signal de commande noté $V_{cont}$. Le signal de commande $V_{cont}$ est un signal de consigne déterminant les caractéristiques fréquentielles et d'amplitude du signal de stimulation $V_{ST}(t)$.

Comme décrit précédemment, l'application du signal de stimulation $V_{ST}$ induit une réponse électromécanique locale au point N1 de la couche piézoélectrique PZ1. La réponse consiste en des déplacements latéraux ou verticaux proportionnellement aux caractéristiques piézoélectriques et ferroélectriques de l'échantillon et au signal injecté. Ces déplacements sont mesurés grâce à la réflexion du laser incident sur l'extrémité du levier L1 vers la photodiode à quatre quadrants PD1, par détection différentielle. En effet, la réponse électro-mécanique de l'échantillon engendre une déformation du levier L1. La déformation du levier L1 engendre le changement d'angle d'incidence entre le laser et la partie supérieure de la pointe ce qui dévie le laser. Cela induit un déplacement du point d'incidence du rayon laser réfléchi sur la photodiode à quatre quadrants PD1. Cela induit la génération d'un signal de mesure différentiel par la photodiode DP1, noté $V_{SPD}$. Afin de quantifier l'amplitude du signal de mesure différentiel, ce dernier est amplifié par l'étage d'amplification AMP1 qui génère un signal de mesure amplifié $V_s$. Ainsi, l'amplitude du signal $V_s$ correspond au déplacement local de l'échantillon, et la phase du signal $V_s$ correspond au déphasage entre la réponse du matériau piézoélectrique et la stimulation.

Le circuit de commande 20 commande le générateur G1 pour générer un signal de stimulation $V_{ST}(t)$ obtenu par la superposition d'un signal de caractérisation $V_{CAR}(t)$ et de deux signaux de redressement $V_{DFRT+}(t)$ et $V_{DFRT-}(t)$.

$$V_{ST}(t) = V_{CAR}(t, f_1) + V_{DFRT+}(t, f_{DFRT+}) + V_{DFRT-}(t, f_{DFRT-})$$

Le signal de caractérisation $V_{CAR}(t)$ présente une amplitude supérieure à celles des deux signaux de redressement $V_{DFRT+}(t)$ et $V_{DFRT-}(t)$. Ainsi, le signal de caractérisation $V_{CAR}(t)$ est le signal utile pour stimuler l'échantillon lors de la caractérisation. D'autre part, les signaux de redressement $V_{DFRT+}(t)$ et $V_{DFRT-}(t)$ sont utilisés pour réaliser une fonction de maintien de la fréquence du signal de caractérisation $V_{CAR}(t)$ égale à la fréquence de résonance $f_0$ en régime permanent.

$$V_{CAR}(t) = V_{DC}(t) + V_{AC}(t) = V_{DC}(t) + V_0 * \sin(2\pi f_1 t + \varphi)$$

avec $V_{DC}(t)$ la composante continue du signal $V_{CAR}(t)$, $V_{AC}(t) = V_0 * \sin(2\pi f_1 t + \varphi)$ est sa composante alternative ayant une première amplitude $V_0$, une première fréquence $f_1$, et une phase initiale $\varphi$. La composante continue joue le rôle de tension de polarisation locale au niveau du point N1. La première fréquence $f_1$ est dénommée « fréquence de travail ».

Nous rappelons que l'ensemble constitué par le levier, la pointe, l'échantillon piézoélectrique et l'électrode présente une fréquence de résonance propre, notée $f_0$. Le circuit de commande 20 est configuré pour maintenir un fonctionnement en résonance tout au long de la caractérisation. Cette fonction est réalisée par l'intermédiaire d'une boucle de rétroaction propageant le signal de mesure amplifié $V_s$ vers le circuit de commande 20. Les solutions connues pour réaliser ce type de circuit présentent des résultats satisfaisants pour des créneaux de lecture et d'écriture avec des durées supérieures à 50ms. Le signal de stimulation noté $V_{ST}(t)$ comprend une succession de fronts montants et descendants sur des durées courtes (de l'ordre de 1ms) ce qui engendre des variations de la fréquence de résonance propre $f_0$. Il en résulte la création d'un régime transitoire, après chaque front de tension, selon le temps de réponse du circuit de commande 20 (de l'ordre de 50ms). Durant ce régime transitoire, on observe un décrochage de la fréquence $f_1$ du signal stimulation $V_{ST}(t)$ de la fréquence de résonance propre $f_0$.

L'étage de détection de stabilité 22 est configuré pour détecter ce décrochage fréquentiel en temps réel pendant la caractérisation et pour générer un signal d'activation d'acquisition $V_{TRIG}$ propagé vers le calculateur CALC suite à la détection d'un fonctionnement en résonance (régime permanent). La durée du régime transitoire n'est pas prédictible, car elle dépend de l'amplitude de variation de la fréquence propre $f_0$ qui reste aléatoire. L'étage de détection de stabilité 22 reçoit une composante spectrale $V_s(f_{DFRT+})$ du signal de mesure Vs associée à la fréquence $f_{DFRT+}$ et une composante spectrale $V_s(f_{DFRT-})$ associée à la fréquence $F_{DFRT-}$ du signal de mesure fournis par le circuit de commande 20. La détection du régime transitoire où le système fonctionne hors résonance est réalisée à partir de la composante spectrale $V_s(f_{DFRT+})$ du signal de mesure Vs associée à la fréquence $f_{DFRT+}$ et de la composante spectrale $V_s(f_{DFRT-})$ associée à la fréquence $f_{DFRT-}$ du signal de mesure.

Alternativement, l'étage de détection de stabilité 22 reçoit le signal de caractérisation $V_{CAR}(t)$ à la fréquence de travail $f_1$. L'étage de détection de stabilité 22 est configuré pour mesurer en temps réel la variation temporelle de la fréquence de travail $f_1$ afin de détecter le régime transitoire où le système fonctionne hors résonance.

Le calculateur CALC est configuré pour traiter le signal de mesure $V_s$ afin d'extraire les caractéristiques piézoélectriques et ferroélectriques de l'échantillon et tracer une courbe d'hystérésis pour chaque point caractérisé de la surface S1. Pour chaque créneau de lecture, une phase d'acquisition est déclenchée par le calculateur CALC suite à la réception d'un ordre d'acquisition via le signal d'activation d'acquisition $V_{TRIG}$. Cela permet d'éviter le traitement du signal de mesure $V_s$ pendant le régime transitoire circuit de commande 20. Ainsi, l'étage de détection de stabilité 22 permet de faire coïncider toujours la phase d'acquisition du calculateur CALC avec le régime permanent du circuit de commande 20. Ainsi, seuls les points de mesures (lecture et écriture) correspondant à un fonctionnement en résonance sont retenus par le calculateur CALC. Cela permet d'améliorer la fiabilité des résultats de la caractérisation. L'amélioration de la fiabilité des résultats permet aussi de réduire la durée d'acquisition par point de la surface S1. Ainsi, cela offre la possibilité d'améliorer la résolution de la cartographie générée par le dispositif de caractérisation par rapport aux solutions de l'état de l'art.

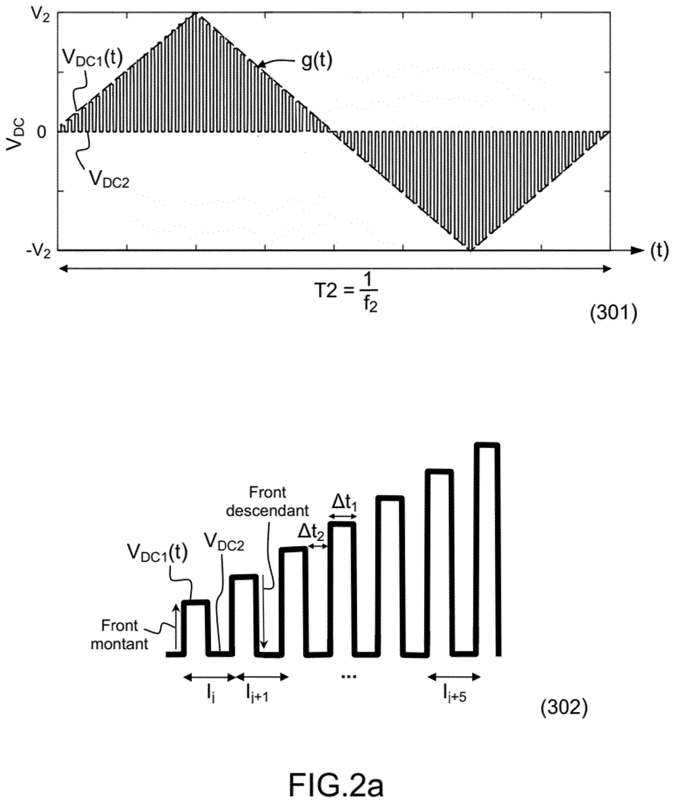

La figure 2a illustre un exemple de la variation au cours du temps de la composante continue $V_{DC}(t)$ du signal de caractérisation $V_{CAR}$.

Le diagramme 301 illustre une période T2 de la fonction périodique g(t). La composante continue $V_{DC}(t)$ varie dans ce cas selon un signal triangulaire périodique modulé par un signal créneau. La période T2 est l'inverse de la seconde fréquence $f_2$ inférieure à la première fréquence $f_1$

La composante continue $V_{DC}(t)$ varie entre une première valeur variable $V_{DC1}(t)$ (créneau d'écriture) et une deuxième valeur constante $V_{DC2}$ (créneau de lecture). La première valeur varie $V_{DC1}(t)$ selon une fonction périodique g(t). La caractérisation locale de l'échantillon est composée d'une pluralité d'itérations. Chaque itération se décompose en une phase d'écriture et une phase de lecture. La phase d'écriture consiste à stimuler l'échantillon localement au point N1 de manière à modifier la distribution de la polarisation électrique locale par effet ferroélectrique. La phase de lecture sert à quantifier la réponse électromécanique locale avec la nouvelle distribution de polarisation électrique obtenue après la phase d'écriture. Pendant une phase d'écriture, la composante continue $V_{DC}(t)$ du signal de caractérisation est égale à la première valeur variable $V_{DC1}(t)$. Pendant une phase de lecture, la composante continue $V_{DC}(t)$ du signal de caractérisation est égale à la seconde valeur constante $V_{DC2}(t)$.

Le diagramme 302 illustre un zoom partiel sur la courbe de variation de la composante continue $V_{DC}(t)$. Un état haut correspond à une phase d'écriture. Un état bas correspond à une phase de lecture. La succession de deux phases correspond à une itération $I_j$. Ainsi, la valeur moyenne de $V_{DC}(t)$ pendant une période correspond à la composante continue $V_{DC2}$. Pour chaque itération $I_j$, le plateau d'une impulsion correspond à la composante continue $V_{DC1}$ du signal de caractérisation $V_{CAR}(t)$ lors de l'écriture. On représente ici à titre d'exemple les itérations I1 à I7 comprenant chacune une lecture et une écriture.

La variation de la composante continue $V_{DC1}$ du signal de $V_{CAR}(t)$ (en écriture), d'une itération à une autre, permet de tracer une courbe d'hystérésis. En effet, la composante continue $V_{DC1}$ décrit pendant une période T2, la plage de valeurs comprise entre $-V_2$ et $+V_2$ ; $V_2$ étant l'amplitude de la fonction enveloppe g(t).

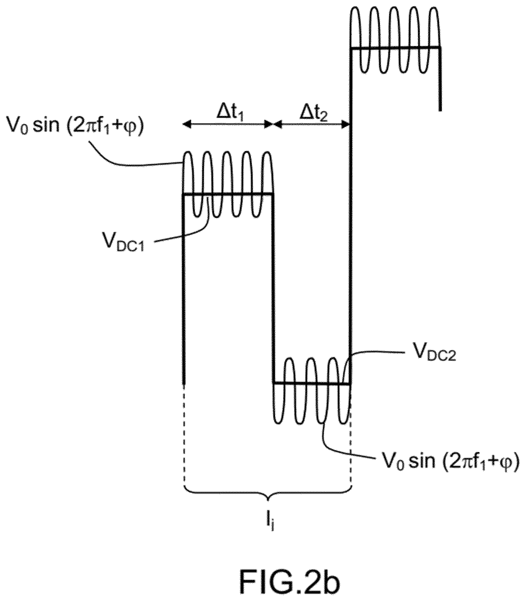

La figure 2b illustre un zoom partiel sur le signal de caractérisation $V_{CAR}(t)$ pendant une itération $I_j$ On illustre sur cette figure la composante continue variable selon l'opération réalisée (lecture ou écriture) et la composante alternative commune aux deux opérations de lecture et d'écriture.

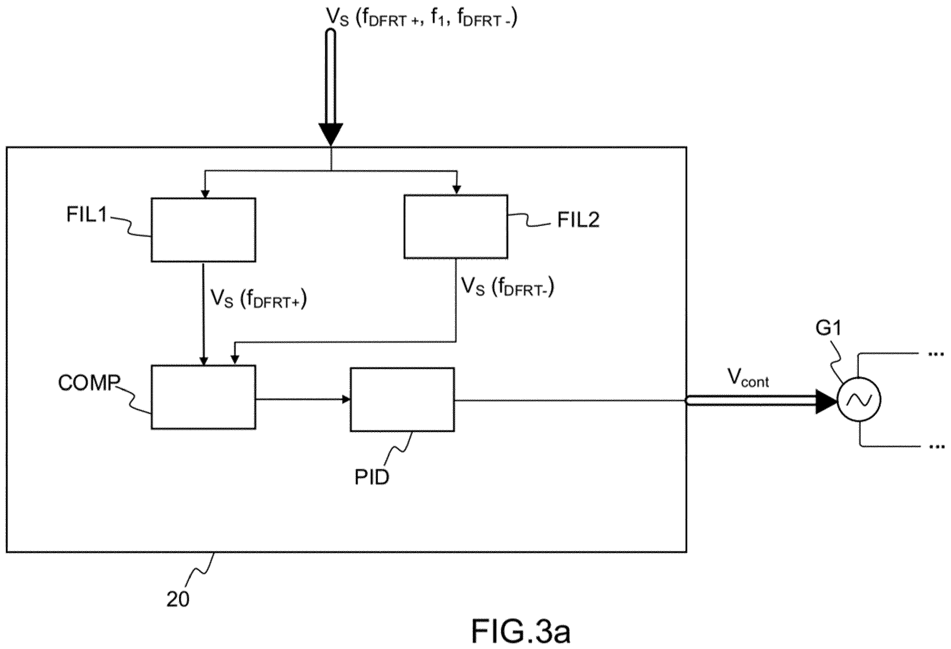

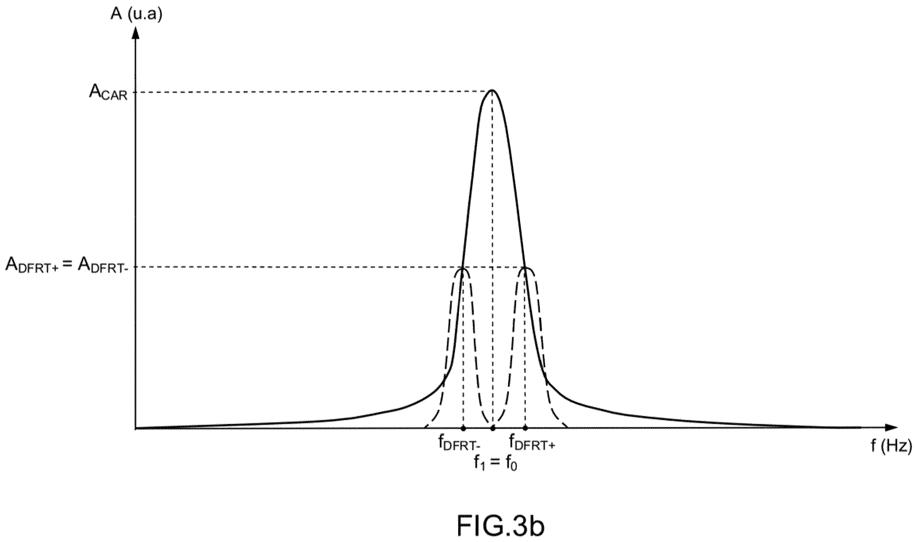

Nous allons dans ce qui suit expliquer le principe de «suivi de résonance à double fréquence » DFRT réalisé par le circuit de commande 20. La figure 3a illustre un schéma d'un exemple de circuit de commande 20 du dispositif expérimental selon l'invention. La figure 3b illustre une analyse spectrale du signal de mesure amplifié $V_s$ à l'entrée du circuit de commande 20.

Le circuit de commande 20 comprend un premier circuit de filtrage fréquentiel FIL1, un second circuit de filtrage fréquentiel FIL2, un circuit comparateur COMP et régulateur PID (acronyme de proportionnel, intégral, dérivé).

Le premier signal de redressement $V_{DFRT+}(t)$ présente une fréquence $f_{DFRT+}=f_1+f_{BW}$ avec $f_{BW}$ de l'ordre de grandeur de la fréquence supérieure à f1 correspondant à à la moitié de la largeur à mi-hauteur du pic de résonance $f_0$. Le second signal de redressement $V_{DFRT-}(t)$ a une fréquence $f_{DFRT-}=f_1-f_{BW}$ avec $f_{BW}$ de l'ordre de grandeur de la fréquence inférieure à $f_1$ correspondant à la moitié de la largeur à mi-hauteur du pic de résonance $f_0$.

Les deux signaux de redressement sont superposés au signal de caractérisation $V_{CAR}(t)$. Le signal de mesure amplifié $V_s$ de la réponse électromécanique comprend trois composantes spectrales ayant chacune une amplitude mesurée : l'amplitude mesurée $A_{CAR}$ résultante du signal de caractérisation $V_{CAR}(t)$ à la fréquence $f_1$, l'amplitude mesurée $A_{DFRT+}$ résultante du premier signal de redressement $V_{DFRT+}(t)$ à la fréquence $f_{DFRT+}$ et l'amplitude mesurée $A_{DFRT-}$ résultante du second signal de redressement $V_{DFRT-}(t)$ à la fréquence $f_{DFRT-}$.

Le premier filtre FIL1 est destiné à filtrer le signal de mesure $V_s$ afin d'extraire la composante spectrale $V_s(f_{DFRT+})$ associée à la fréquence $f_{DFRT+}$ d'amplitude $A_{DFRT+}$. Le second filtre FIL2 est destiné à filtrer le signal de mesure $V_s$ afin d'extraire la composante spectrale $V_s(f_{DFRT-})$ associée à la fréquence $f_{DFRT-}$ d'amplitude $A_{DFRT-}$. Le comparateur COMP est destiné à comparer l'amplitude $A_{DFRT-}$ à l'amplitude $A_{DFRT+}$. Si elles sont égales $A_{DFRT-}=A_{DFRT+}$ cela signifie que le pic de la composante spectrale associée à la fréquence $f_1$ est symétrique et que l'amplitude $A_{CAR}$ est maximale. Cela indique que la fréquence $f_0$ n'a pas dérivé et que la première fréquence $f_1$ est égale à la fréquence de résonance $f_0$.

Lorsque la fréquence de résonance $f_0$ dérive, l'égalité $f_1=f_0$ n'est plus respectée. Le pic de la composante spectrale associée à la fréquence $f_1$ n'est plus symétrique par rapport à l'intervalle [$f_{DFRT-}$, $f_{DFRT+}$]. Ainsi, $A_{DFRT-}$ est différente de $A_{DFRT+}$ et le circuit comparateur COMP génère un signal qui active le régulateur PID. Le régulateur PID modifie alors la consigne en fréquence $f_1$ portée par le signal de commande $V_{cont}$. Le régulateur PID est configuré pour agir sur la fréquence $f_1$ de manière à maintenir les amplitudes $A_{DFRT+}$ et $A_{DFRT-}$ égales entre elles. Cela permet d'ajuster en temps réel la fréquence $f_1$ avec les variations de la fréquence de résonance $f_0$.

Le régulateur PID implémente un signal de consigne proportionnel à la différence des amplitudes $A_{DFRT+}$ et $A_{DFRT-}$ pour corriger la fréquence $f_1$ dans le sens de cette différence. D'où, le circuit de commande 20 permet de maintenir la fréquence $f_1$ égale à la fréquence $f_0$ à son régime permanent.

Cependant, le fonctionnement en résonance n'est pas assuré lors du régime transitoire du circuit de commande 20, plus particulièrement à cause au temps de réponse relativement long du régulateur PID.

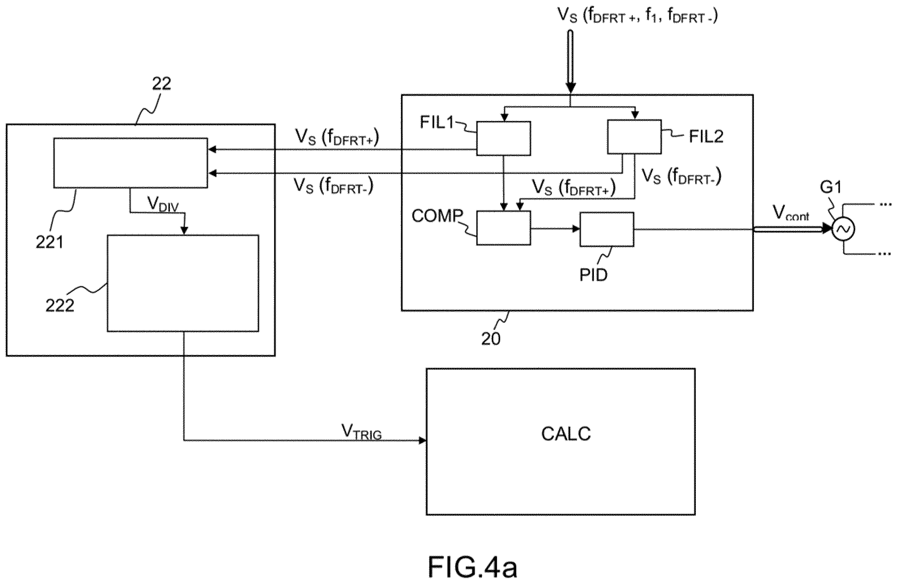

La figure 4a illustre un schéma de l'étage de détection de stabilité 22 et ses interactions avec les autres circuits du dispositif expérimental selon l'invention. Le circuit de détection de stabilité 22 comprend un circuit diviseur 221 et un circuit d'activation d'acquisition 222.

Le circuit diviseur 221 reçoit la composante spectrale $V_s(f_{DFRT+})$ associée à la fréquence $f_{DFRT+}$ d'amplitude $A_{DFRT+}$ et la composante spectrale $V_s(f_{DFRT-})$ associée à la fréquence $f_{DFRT-}$ d'amplitude $A_{DFRT-}$ fournis par le circuit de commande 20. Les amplitudes $A_{DFRT+}$ et $A_{DFRT-}$ sont traitées en temps réel par le circuit diviseur 221 afin de générer le signal de sortie $V_{DIV}$ permettant de quantifier l'écart relatif entre les deux amplitudes précitées. Le circuit diviseur 221 est réalisé par un circuit microcontrôleur.

$$V_{DIV}(t) = \frac{|Vs(f_{DFRT+})-Vs(f_{DFRT-})|}{Vs(f_{DFRT+})}.$$

Le circuit diviseur 221 présente un temps de réponse plus court que le régulateur PID. En effet, le régulateur PID fonctionne par itération. Pour chaque itération, la fréquence $f_1$ est modifiée à chaque itération jusqu'à converger vers la nouvelle fréquence de résonance réelle. Le circuit diviseur effectue une opération de comparaison en temps réel et renvoie un résultat binaire du résultat de comparaison, ce qui nécessite beaucoup moins d'opérations de calcul.

Le circuit d'activation d'acquisition 222 compare le signal de sortie $V_{DIV}$ à un seuil prédéterminé (5% par exemple) pour tester le critère de différence d'amplitude entre les deux composantes spectrales $V_s(f_{DFRT+})$ et $V_s(f_{DFRT-})$. Le circuit d'activation d'acquisition est configuré pour générer un signal d'activation de l'acquisition $V_{TRIG}$ vers le calculateur CALC lorsque $V_{DIV}$ est inférieur au seuil prédéterminé. La détection du passage de $V_{DIV}$ à une valeur inférieure au seuil indique une stabilisation de la fréquence de travail $f_1$ à une valeur proche de la fréquence de résonance propre $f_0$. Le circuit d'activation d'acquisition 222 est réalisé par un circuit microcontrôleur.

L'étage de détection de stabilité 22 permet ainsi de déclencher l'acquisition des mesures par le calculateur CALC uniquement lorsque le circuit de commande est en régime permanent et donc lorsque l'effet de décrochage de la fréquence de travail $f_1$ résultant d'un front montant (ou descendant) de $V_{CAR}(t)$ est corrigé.

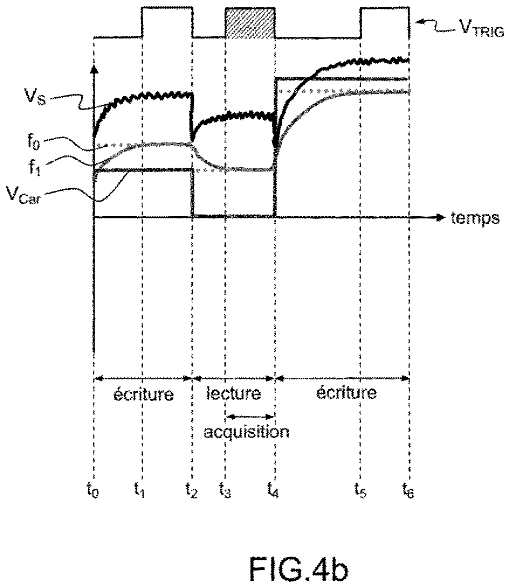

La figure 4b illustre un premier exemple de la phase de stabilisation suite à une transition montante ou descendante de la tension $V_{CAR}(t)$ appliquée entre la pointe et l'électrode inférieure de l'échantillon.

À l'instant t0, un front montant sur le signal de caractérisation $V_{CAR}(t)$ déclenche une phase d'écriture. Le front montant induit un décrochage de la fréquence de travail $f_1$ de la résonance suite à la modification de la fréquence de résonance propre $f_0$. La caractérisation ne se fait plus selon le fonctionnement en résonance. Le régime transitoire de stabilisation du circuit de commande 20 est illustré par la variation de la fréquence de travail $f_1$ qui évolue pour tendre vers la nouvelle valeur de la résonance propre $f_0$. Le régime transitoire se déroule entre t0 et t1.

À l'instant t1, la fréquence de travail $f_1$ est égale à la résonance propre $f_0$ sous l'action du régulateur PID. Le régime permanent est établi et le dispositif de caractérisation D1 fonctionne en résonance. La fréquence $f_1$ est le signal de mesure Vs sont stabilisés. L'étage de détection de stabilité 22 génère un signal d'activation d'acquisition $V_{TRIG}$ haut selon le fonctionnement préalablement décrit. D'une manière optionnelle, cette variation du signal d'activation d'acquisition $V_{TRIG}$ ne déclenche pas une acquisition par le calculateur CALC car il s'agit d'une phase d'écriture et non de lecture.

À l'instant t2, un front montant sur le signal de caractérisation $V_{CAR}(t)$ déclenche une phase de lecture. Le front descendant induit un décrochage de la fréquence de travail $f_1$ de la résonance suite à la modification de la fréquence de résonance propre $f_0$. La caractérisation ne se fait plus selon le fonctionnement en résonance. Le régime transitoire de stabilisation du circuit de commande 20 est illustré par la variation de la fréquence de travail $f_1$ qui évolue pour tendre vers la nouvelle valeur de la résonance propre $f_0$. Le régime transitoire se déroule entre t2 et t3. L'étage de détection de stabilité 22 génère un signal d'activation d'acquisition $V_{TRIG}$ à l'état logique haut de manière à empêcher l'acquisition durant le régime transitoire. Cela permet d'exclure les points de mesure réalisés hors résonance de l'acquisition faite par le calculateur CALC.

À l'instant t3, la fréquence de travail $f_1$ est égale à la résonance propre $f_0$ sous l'action du régulateur PID. Le régime permanent est établi et le dispositif de caractérisation D1 fonctionne en résonance. La fréquence $f_1$ est le signal de mesure Vs sont stabilisés. L'étage de détection de stabilité 22 génère un signal d'activation d'acquisition $V_{TRIG}$ à l'état logique haut selon le fonctionnement préalablement décrit. Il s'agit d'un créneau de lecture du signal de caractérisation $V_{CAR}(t)$. Ainsi, l'activation du signal d'activation d'acquisition $V_{TRIG}$, déclenche l'acquisition des points de mesures de Vs par le calculateur CALC entre t3 et t4. Les points de mesures durant cette durée d'acquisition sont traités $V_s$ afin d'extraire les caractéristiques piézoélectriques et ferroélectriques de l'échantillon et tracer une courbe d'hystérésis pour chaque point caractérisé de la surface S1.

Avantageusement, il est possible d'améliorer la fiabilité des mesures en réalisant des traitements statistiques de la pluralité de points de mesures associés à un seul point de la surface. Ainsi le dispositif de caractérisation D1 est configuré pour:

- réaliser successivement une pluralité de mesures de la réponse électromécanique en phase et en amplitude de l'échantillon selon un fonctionnement en résonance, et

- réaliser des traitements statistiques de la pluralité de mesures de type moyenne et/ou écart-type.

Il devient alors possible d'évaluer la pertinence des mesures et d'augmenter la fiabilité de la caractérisation.

À l'instant t4, un front montant sur le signal de caractérisation $V_{CAR}(t)$ déclenche une nouvelle phase d'écriture et ainsi une nouvelle itération. Le dispositif de caractérisation fonctionne d'une manière similaire entre t4 et t6 à la phase d'écriture précédente (de t0 à t2).

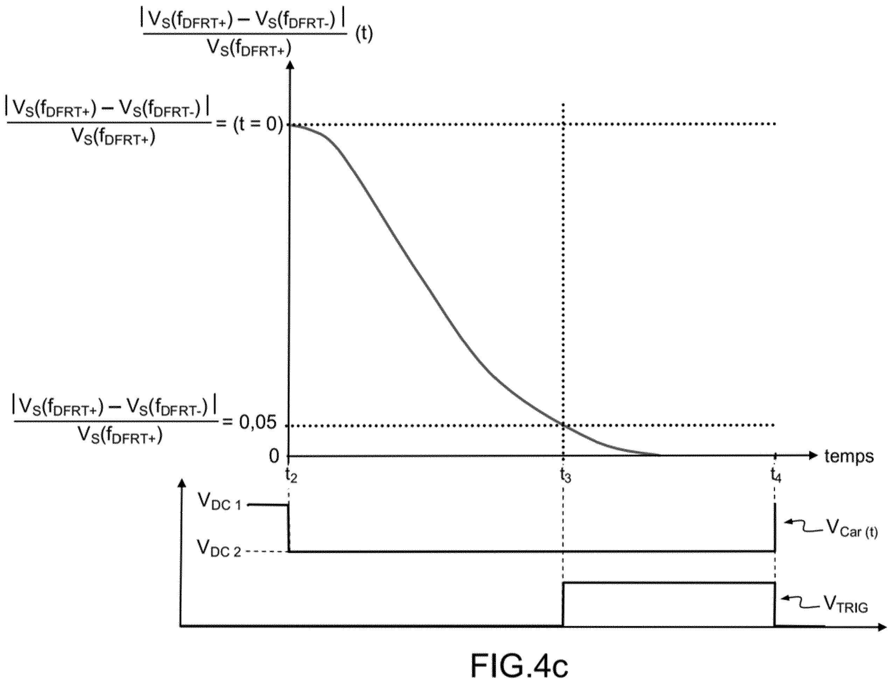

La figure 4c illustre le traitement réalisé par l'étage de détection de stabilité 22 pendant une phase de lecture entre t2 et t4 tel que décrit précédemment. Entre t2 et t3, le circuit de commande 20 fonctionne en régime transitoire suite au décrochage de la fréquence de travail $f_1$ de la fréquence de résonance $f_0$. On illustre l'évolution temporelle de la fréquence $f_1$ qui tend vers la nouvelle valeur de $f_0$. On illustre aussi l'action de l'étage de détection de stabilité 22 qui génère un signal $V_{TRIG}$ à un état logique bas de manière à bloquer l'acquisition des points de mesure par le calculateur CALC pendant le régime transitoire. Pendant ce régime transitoire, le critère $\dfrac{|Vs(f_{DFRT+}) - Vs(f_{DFRT-})|}{Vs(f_{DFRT+})} < 5\%$ n'est pas respecté. À t3,

le critère $\dfrac{|Vs(f_{DFRT+}) - Vs(f_{DFRT-})|}{Vs(f_{DFRT+})} < 5\%$ est respecté, ce qui indique un passage au régime transitoire équivalant à un fonctionnement en résonance. L'étage de détection de stabilité 22 qui génère un signal $V_{TRIG}$ à un état logique haut de manière à activer l'acquisition des points de mesure par le calculateur CALC pendant le régime permanent entre t3 et t4.

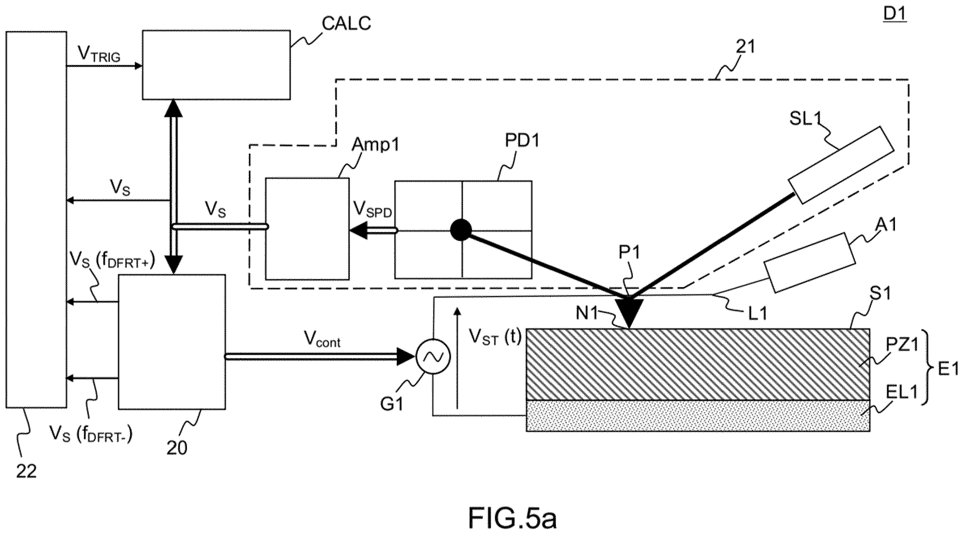

La figure 5a illustre un deuxième mode de réalisation du dispositif expérimental D1 selon l'invention. Le mode de réalisation diffère du premier mode de réalisation par la transmission du signal de mesure $V_s$ vers l'étage de détection de stabilité 22. Ce mode de réalisation permet de tenir en compte du phénomène de « commutation arrière ferroélectrique » (traduction du terme anglais Ferroelectric Back-Switching). Nous allons dans ce qui suit expliquer le phénomène de « commutation arrière ferroélectrique ».

En effet, pour certains matériaux, la stabilité des domaines ferroélectriques créés lors d'une opération d'écriture est limitée dans le temps. Lors d'un front de transition d'un créneau d'écriture à un créneau de lecture sur $V_{CAR}(t)$, le domaine précédemment écrit peut revenir à son état de polarisation initial : on parle de phénomène de « commutation arrière ferroélectrique ». Ce phénomène induit une variation au cours du temps du signal de mesure $V_s$.

Dans ce mode de réalisation, l'étage de détection de stabilité 22 est configuré en outre à détecter la variation du

signal de mesure $V_s$. Si le signal de mesure $V_s$ est stabilisé avec la stabilisation de la fréquence de travail $f_1$, cela indique qu'il n'y a pas de phénomène de « commutation arrière ferroélectrique ». Si malgré la stabilisation de la fréquence de travail $f_1$ le signal de mesure $V_s$ continue à varier au cours du temps, cela signifie qu'un phénomène de « commutation arrière ferroélectrique » s'est produit.

À titre d'exemples non limitatifs, les matériaux susceptibles de présenter le phénomène de « commutation arrière ferroélectrique » pendant la caractérisation sont le polyvinylidene fluoride (PVDF), $Sn_2P_2S_6$ et $BaTiO_3$.

Avantageusement, l'étage de détection de stabilité 22 peut être programmé pour bloquer l'acquisition par le calculateur CALC via le signal d'activation d'acquisition $V_{TRIG}$. L'invention permet ainsi de tenir en compte du phénomène de« commutation arrière ferroélectrique, ce qui améliore la qualité des données de caractérisations obtenues.

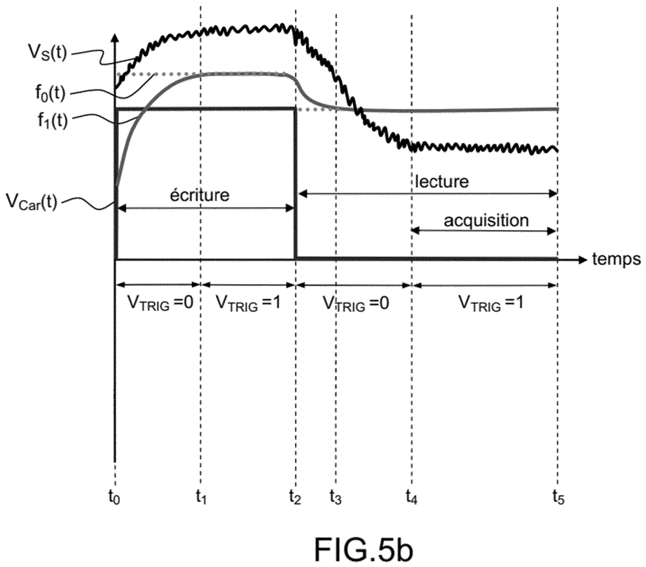

La figure 5b illustre un exemple de la phase de stabilisation suite à une transition montante ou descendante de la tension appliquée entre la pointe et l'électrode inférieure de l'échantillon dans le cas de « commutation arrière ferroélectrique ». Lors d'une phase de lecture, l'acquisition des points de mesure est activée uniquement lorsque la fréquence de travail $f_1$ est stabilisée à une valeur sensiblement égale à la fréquence de résonance $f_0$ mais aussi lorsque le signal de mesure $V_s$ est sensiblement constant au cours du temps.

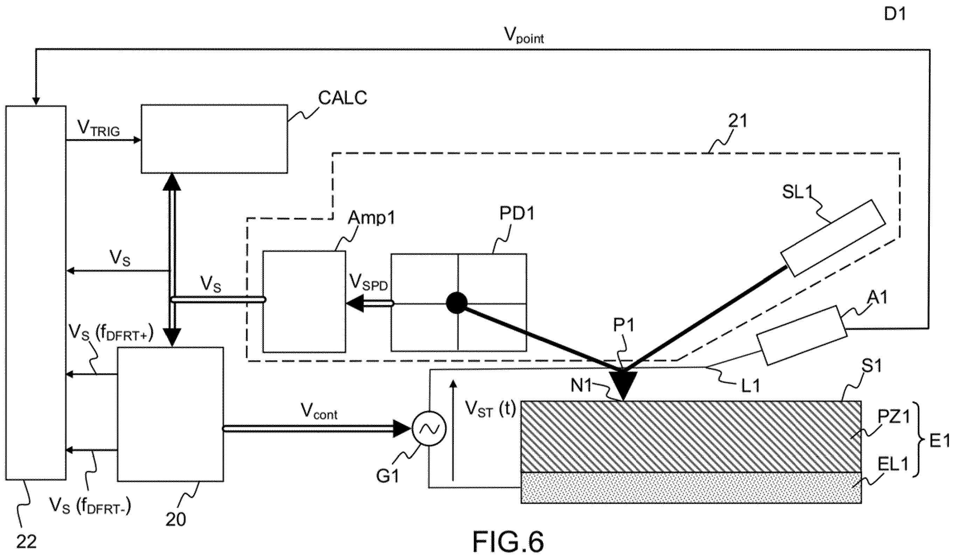

La figure 6 illustre un du troisième mode de réalisation du dispositif expérimental D1 selon l'invention. Le mode de réalisation diffère du premier mode de réalisation (et du deuxième mode de réalisation) par la génération d'un signal $V_{point}$ indiquant si la pointe P1 est en contact avec un point N1 de la surface à caractériser. À titre d'exemple, lorsque l'actionneur A1 commande mécaniquement le levier L1 pour changer de point de contact avec la surface S1, la pointe conductrice P1 n'est plus en contact avec la surface. L'actionneur A1 fournit un signal $V_{point}$ indiquant le déclenchement du changement de point de caractérisation à l'étage de détection de stabilité 22. En réponse à cette indication, l'étage de détection de stabilité 22 inhibe l'acquisition par le calculateur CALC. Ce mode de réalisation permet d'exclure les résultats d'acquisition obtenus lors du changement d'un point de la surface S1à un autre.

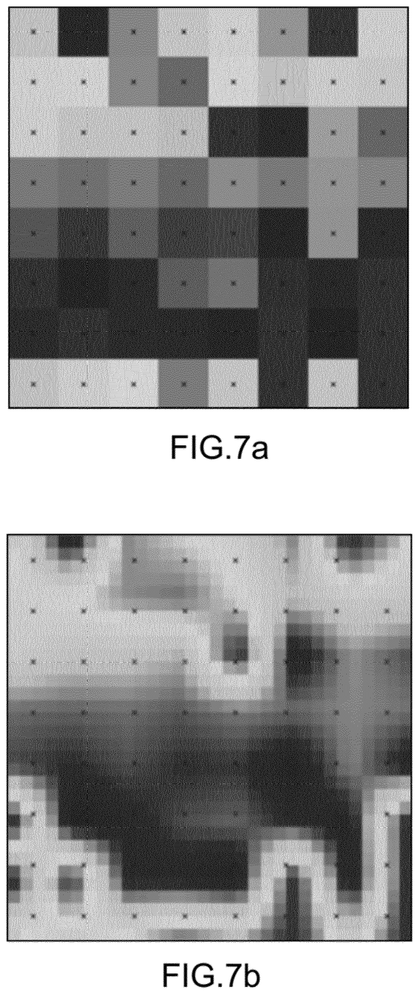

La figure 7a illustre un exemple de la cartographie obtenu par un dispositif expérimental selon l'état de l'art. La figure 7b illustre un exemple de la cartographie obtenu par le dispositif expérimental D1 selon l'invention. La carte obtenue par le dispositif expérimental D1 selon l'invention présente une résolution supérieure à celle de l'état de l'art. En effet, la désactivation de l'acquisition lorsque le dispositif D1 fonctionne hors résonance (plus particulièrement le régime transitoire du régulateur PID) permet d'améliorer la qualité des données acquises. Cela permet de réduire la durée des créneaux de lecture pour chaque point et ainsi améliorer la résolution spatiale de caractérisation à durée égale par rapport à l'état de l'art.

## Revendications

**1.** Dispositif de caractérisation (D1) d'un échantillon piézoélectrique (E1) ayant une électrode inférieure (EL1) et une surface supérieure (S1), le dispositif comprenant :

- une pointe conductrice (P1) placée à une extrémité d'un levier (L1) et destinée à être placée en contact avec un point (N1) de la surface supérieure (S1) ; l'ensemble formé par la pointe, l'échantillon et l'électrode inférieure ayant une fréquence de résonance variable ($f_0$) ;
- un générateur de tension (G1) configuré pour appliquer, entre l'électrode inférieure (EL1) et la pointe conductrice (P1), un signal de caractérisation ($V_{CAR}$) à une première fréquence ($f_1$) ; le générateur de tension (G1) étant configuré également pour générer :

  ○ un premier signal de redressement ($V_{DFRT+}$) à une deuxième fréquence ($f_{DFRT+}$) supérieure à la première fréquence ($f_1$) ;
  ○ un second signal de redressement ($V_{DFRT-}$) à une troisième fréquence ($f_{DFRT-}$) inférieure à la première fréquence ($f_1$) ;
  les deux signaux de redressement ($V_{DFRT-}$, $V_{DFRT+}$) présentant respectivement une amplitude inférieure à celle du signal de caractérisation ($V_{CAR}$) et étant superposées avec le signal de caractérisation ($V_{CAR}$) ; et la deuxième fréquence ($f_{DFRT+}$) et la troisième fréquence ($f_{DFRT-}$) étant équidistantes de la première fréquence ($f_0$).

- une chaine de mesure (21) configurée pour générer un signal de mesure ($V_s$) de la réponse électromécanique de l'échantillon ; ledit signal de mesure comprenant une première composante spectrale (($V_s(f_1)$) associée à la première fréquence ($f_1$), une deuxième composante spectrale ($V_s(f_{DFRT+})$) associée à la deuxième fréquence ($f_{DFRT+}$) et une troisième composante spectrale ($V_s(f_{DFRT-})$) associée à la troisième fréquence ($f_{DFRT-}$) ;
- un circuit de commande (20) configuré pour commander le générateur de tension (G1) en générant un signal de commande ($V_{cont}$) à partir du signal de mesure ($V_s$) reçu par l'intermédiaire d'une boucle de rétroaction de manière à maintenir la première fréquence ($f_1$) égale à la fréquence de résonance ($f_0$) pendant un régime permanent suite à un régime transitoire ; ledit régime transitoire correspondant à un fonctionnement hors résonance pendant lequel la fréquence de résonance variable ($f_0$) est différente de la première fréquence ($f_1$);
- un calculateur (CALC) configuré pour réaliser au moins une opération d'acquisition de données de mesures à partir du signal de mesure ($V_s$) ;

le dispositif de caractérisation (D1) étant **caractérisé en ce qu'**il comprend :

- un étage de détection de stabilité (22) configuré pour recevoir la deuxième et la troisième composantes spectrales du signal de mesure ($V_s(f_{DFRT+})$, $V_s(f_{DFRT-})$) associé au point (N1) et pour commander l'activation de l'acquisition réalisée par le calculateur (CALC) à travers un signal d'activation d'acquisition ($V_{TRIG}$) généré à partir de ces deux composantes spectrales de manière à désactiver l'opération d'acquisition lors du régime transitoire .

2. Dispositif de caractérisation (D1) selon la revendication 1 dans lequel le calculateur (CALC) est configuré pour déterminer une courbe d'hystérésis d'amplitude et/ou de phase associée au point (N1) à partir du signal de mesure ($V_s$) lors d'une opération d'acquisition.

3. Dispositif de caractérisation (D1) selon l'une des revendications 1 ou 2 dans lequel lorsque l'étage de détection de stabilité (22) reçoit également la composante spectrale du signal de mesure ($V_s(f_1)$) associée au point (N1), l'étage de détection de stabilité (22) est configuré pour réaliser les opérations suivantes pour ledit point (N1) :

- mesurer la variation de la première fréquence ($f_1$) au cours du temps ;
- activer l'opération d'acquisition par le calculateur (CALC) lorsque la première fréquence ($f_1$) est stabilisée à une valeur sensiblement égale à la fréquence de résonance ($f_0$).

4. Dispositif de caractérisation (D1) selon la revendication 3 dans lequel l'étage de détection de stabilité (22) est configuré pour réaliser, en outre, les opérations suivantes pour ledit point (N1) :

- mesurer la variation de l'amplitude du signal de mesure ($V_s$) au cours du temps ;
- activer l'opération d'acquisition par le calculateur (CALC) lorsque :

o la première fréquence ($f_1$) est stabilisée à une valeur sensiblement égale à la fréquence de résonance ($f_0$) ;
o et la variation du signal de mesure ($V_s$) est inférieure à un premier seuil prédéterminé.

5. Dispositif de caractérisation (D1) selon l'une quelconque des revendications 1 à 4 dans lequel l'étage de détection de stabilité (22) est configuré pour, en outre, désactiver l'opération d'acquisition lorsque la pointe conductrice (P1) est écartée de la surface supérieure (S1).

6. Dispositif de caractérisation (D1) selon l'une quelconque des revendications 1 à 5 dans lequel le circuit de commande (20) comprend un premier filtre (FIL1) destiné à extraire la deuxième composante spectrale ($V_s(f_{DFRT+})$) et un second filtre (FIL2) destiné à extraire la troisième composante spectrale ($V_s(f_{DFRT-})$).

7. Dispositif de caractérisation (D1) selon la revendication 6 dans lequel le circuit de commande (20) comprend un régulateur (PID) pour générer le signal de commande ($V_{cont}$) de manière à maintenir une égalité entre l'amplitude de la deuxième composante spectrale ($V_s(f_{DFRT+})$) et celle de la troisième composante spectrale ($V_s(f_{DFRT-})$) pendant le régime permanent suite au régime transitoire.

8. Dispositif de caractérisation (D1) selon l'une quelconque des revendications 5 à 7 dans lequel l'étage de détection de stabilité (22) comprend un circuit diviseur (221) configuré pour calculer la valeur absolue de la différence relative ($V_{DIV}$) entre :

- d'une part l'amplitude de la deuxième composante spectrale ($V_s(f_{DFRT+})$) ;
- et d'autre part l'amplitude de la troisième composante spectrale ($V_s(f_{DFRT-})$).

9. Dispositif de caractérisation (D1) selon la revendication 8 dans lequel l'étage de détection de stabilité (22) comprend en outre un circuit d'activation d'acquisition (222) configuré pour :

- comparer la valeur absolue de la différence relative ($V_{DIV}$) à un second seuil prédéterminé ;

- générer le signal d'activation d'acquisition ($V_{TRIG}$) vers le calculateur (CALC) lorsque la valeur absolue de la différence relative ($V_{DIV}$) est inférieure au second seuil prédéterminé.

**Patentansprüche**

1. Vorrichtung (D1) zum Charakterisieren einer piezoelektrischen Probe (E1), die eine untere Elektrode (EL1) und eine obere Oberfläche (S1) aufweist, wobei die Vorrichtung Folgendes umfasst:

   - eine leitfähige Spitze (P1), die an einem Ende eines Hebels (L1) platziert und dafür geeignet ist, in Kontakt mit einem Punkt (N1) der oberen Oberfläche (S1) platziert zu werden;
   wobei die von der Spitze, der Probe und der unteren Elektrode gebildete Anordnung eine variable Resonanzfrequenz ($f_0$) aufweist;

   - einen Spannungsgenerator (G1), der dafür konfiguriert ist, zwischen der unteren Elektrode (EL1) und der leitfähigen Spitze (P1) ein Charakterisierungssignal ($V_{CAR}$) mit einer ersten Frequenz ($f_1$) anzulegen; wobei der Spannungsgenerator (G1) auch dafür konfiguriert ist, Folgendes zu erzeugen:

     ∘ ein erstes Gleichrichtsignal ($V_{DFRT+}$) mit einer zweiten Frequenz ($f_{DFRT+}$), die höher als die erste Frequenz ($f_1$) ist;
     ∘ ein zweites Gleichrichtsignal ($V_{DFRT-}$) mit einer dritten Frequenz ($f_{DFRT-}$), die niedriger als die erste Frequenz ($f_1$) ist;

   wobei die beiden Gleichrichtsignale ($V_{DFRT-}$, $V_{DFRT+}$) jeweils eine kleinere Amplitude als diejenige des Charakterisierungssignals ($V_{CAR}$) aufweisen und mit dem Charakterisierungssignal ($V_{CAR}$) überlagert sind; und die zweite Frequenz ($f_{DFRT+}$) und die dritte Frequenz ($f_{DFRT-}$) den gleichen Abstand zur ersten Frequenz ($f_0$) haben,

   - eine Messkette (21), die dafür konfiguriert ist, ein Messsignal ($V_s$) der elektromechanischen Reaktion der Probe zu erzeugen; wobei das Messsignal eine erste spektrale Komponente (($V_s(f_1)$)), die der ersten Frequenz ($f_1$) zugeordnet ist, eine zweite spektrale Komponente ($V_s(f_{DFRT+})$), die der zweiten Frequenz ($f_{DFRT+}$) zugeordnet ist, und eine dritte spektrale Komponente ($V_s(f_{DFRT-}$), die der dritten Frequenz ($f_{DFRT-}$) zugeordnet ist, umfasst;
   - eine Steuerschaltung (20), die dafür konfiguriert ist, den Spannungsgenerator (G1) zu steuern, indem sie ein Steuersignal ($V_{cont}$) anhand des Messsignals ($V_s$) erzeugt, das sie über eine Rückkopplungsschleife erhält, sodass die erste Frequenz ($f_1$) während eines statischen Zustands folgend einem Übergangszustand gleich wie die Resonanzfrequenz ($f_0$) gehalten wird; wobei der Übergangszustand einer Funktionsweise außerhalb einer Resonanz entspricht, während welcher sich die variable Resonanzfrequenz ($f_0$) von der ersten Frequenz ($f_1$) unterscheidet;
   - einen Rechner (CALC), der dafür konfiguriert ist, mindestens eine Messdatenerfassungsoperation anhand des Messsignals ($V_s$) durchzuführen;

   wobei die Charakterisierungsvorrichtung (D1) **dadurch gekennzeichnet ist, dass** sie eine Stabilitätserkennungsstufe (22) umfasst, die dafür konfiguriert ist, die zweite und die dritte spektrale Komponente des Messsignals ($V_s(f_{DFRT+})$, $V_s(f_{DFRT-})$), das dem Punkt (N1) zugeordnet ist, zu empfangen, und die Aktivierung der Erfassung zu steuern, die durch den Rechner (CALC) durchgeführt wird, mittels eines Erfassungsaktivierungssignals ($V_{TRIG}$), das anhand mindestens dieser beiden spektralen Komponenten derart erzeugt wird, dass die Erfassungsoperation während des Übergangszustands deaktiviert wird.

2. Charakterisierungsvorrichtung (D1) nach Anspruch 1, wobei der Rechner (CALC) dafür konfiguriert ist, eine Hysteresekurve einer Amplitude und/oder Phase, die dem Punkt (N1) zugeordnet ist, anhand des Messsignals ($V_s$) während einer Erfassungsoperation zu bestimmen.

3. Charakterisierungsvorrichtung (D1) nach einem der Ansprüche 1 oder 2, wobei, wenn die Stabilitätserkennungsstufe (22) ebenfalls die spektrale Komponente des Messsignals $V_s(f_1)$, die dem Punkt (N1) zugeordnet ist, empfängt, die Stabilitätserkennungsstufe (22) dafür konfiguriert ist, die folgenden Operationen für den Punkt (N1) durchzuführen:

   - Messen der Schwankung der ersten Frequenz ($f_1$) im zeitlichen Verlauf;
   - Aktivieren der Erfassungsoperation durch den Rechner (CALC), wenn die erste Frequenz ($f_1$) auf einen Wert im Wesentlichen gleich der Resonanzfrequenz ($f_0$) stabilisiert ist.

4. Charakterisierungsvorrichtung (D1) nach Anspruch 3, wobei die Stabilitätserkennungsstufe (22) dafür konfiguriert ist, ferner die folgenden Operationen für den Punkt (N1) durchzuführen:

- Messen der Schwankung der Amplitude des Messsignals ($V_s$) im zeitlichen Verlauf;
- Aktivieren der Erfassungsoperation durch den Rechner (CALC), wenn:

  ∘ die erste Frequenz ($f_1$) auf einen Wert im Wesentlichen gleich der Resonanzfrequenz ($f_0$) stabilisiert ist;
  ∘ und die Schwankung des Messsignals ($V_s$) kleiner als ein erster vorbestimmter Schwellenwert ist.

5. Charakterisierungsvorrichtung (D1) nach einem der Ansprüche 1 bis 4, wobei die Stabilitätserkennungsstufe (22) ferner dafür konfiguriert ist, die Erfassungsoperation zu deaktivieren, wenn die leitfähige Spitze (P1) von der oberen Oberfläche (S1) entfernt wird.

6. Charakterisierungsvorrichtung (D1) nach einem der Ansprüche 1 bis 5, wobei die Steuerschaltung (20) ein erstes Filter (FIL1), das dazu geeignet ist, die zweite spektrale Komponente ($V_s(f_{DFRT+})$) zu extrahieren, und ein zweites Filter (FIL2) umfasst, das dazu geeignet ist, die dritte spektrale Komponente ($V_s(f_{DFRT-})$) zu extrahieren.

7. Charakterisierungsvorrichtung (D1) nach Anspruch 6, wobei die Steuerschaltung (20) einen Regler (PID) umfasst, um das Steuersignal ($V_{cont}$) zu erzeugen, sodass eine Gleichheit zwischen der Amplitude der zweiten spektralen Komponente ($V_s(f_{DFRT+})$) und derjenigen der dritten spektralen Komponente ($V_s(f_{DFRT-})$) während des statischen Zustands nach dem Übergangszustand aufrechterhalten wird.

8. Charakterisierungsvorrichtung (D1) nach einem der Ansprüche 5 bis 7, wobei die Stabilitätserkennungsstufe (22) eine Teilungsschaltung (221) umfasst, die dafür konfiguriert ist, den absoluten Wert der relativen Differenz ($V_{DIV}$) zwischen Folgendem zu berechnen:

- einerseits der Amplitude der zweiten spektralen Komponente ($V_s(f_{DFRT+})$),
- und andererseits der Amplitude der dritten spektralen Komponente ($V_s(f_{DFRT-})$).

9. Charakterisierungsvorrichtung (D1) nach Anspruch 8, wobei die Stabilitätserkennungsstufe (22) ferner eine Erfassungsaktivierungsschaltung (222) umfasst, die dafür konfiguriert ist:

- den absoluten Wert der relativen Differenz ($V_{DIV}$) mit einem zweiten vorbestimmten Schwellenwert zu vergleichen;
- das Erfassungsaktivierungssignal ($V_{TRIG}$) zum Rechner (CALC) zu erzeugen, wenn der absolute Wert der relativen Differenz ($V_{DIV}$) kleiner als der zweite vorbestimmte Schwellenwert ist.

## Claims

1. A device (D1) for characterising a piezoelectric sample (E1) with a lower electrode (EL1) and an upper surface (S1), the device comprising:

   - a conductive tip (P1) placed at one end of a lever (L1) and intended to be placed in contact with a point (N1) of the upper surface (S1),
   the assembly formed by the tip, the sample and the lower electrode having a variable resonant frequency ($f_0$);

     - a voltage generator (G1) configured to apply a characterisation signal ($V_{CAR}$) at a first frequency ($f_1$) between the lower electrode (EL1) and the conductive tip (P1); the voltage generator (G1) also being configured to generate:

       ∘ a first rectification signal ($V_{DFRT+}$) at a second frequency ($f_{DFRT+}$) higher than the first frequency ($f_1$);
       ∘ a second rectification signal ($V_{DFRT-}$) at a third frequency ($f_{DFRT-}$) lower than the first frequency ($f_1$);

     the two rectification signals ($V_{DFRT-}$, $V_{DFRT+}$) respectively having an amplitude below that of the characterisation signal ($V_{CAR}$) and being superimposed with the characterisation signal ($V_{CAR}$); and the second frequency ($f_{DFRT+}$)

and the third frequency ($f_{DFRT-}$) being equidistant from the first frequency ($f_0$);

- a measurement chain (21) configured to generate a measurement signal ($V_s$) of the electromechanical response of the sample; said measurement signal comprising a first spectral component (($V_s(f_1)$)) associated with the first frequency ($f_1$), a second spectral component ($V_s(f_{DFRT+})$) associated with the second frequency ($f_{DFRT+}$) and a third spectral component ($V_s(f_{DFRT-})$) associated with the third frequency ($f_{DFRT-}$);
- a control circuit (20) configured to control the voltage generator (G1) by generating a control signal ($V_{cont}$) from the measurement signal ($V_s$) received via a feedback loop so as to keep the first frequency ($f_1$) equal to the resonant frequency ($f_0$) during a steady state following a transient state; said transient state corresponding to off-resonance operation, during which the variable resonant frequency ($f_0$) differs from the first frequency ($f_1$);
- a computer (CALC) configured to carry out at least one operation of acquiring measurement data from the measurement signal ($V_s$);

the characterisation device (D1) being **characterised in that** it comprises a stability detection step (22) configured to receive the second and the third spectral components of the measurement signal ($V_s(f_{DFRT+})$, $V_s(f_{DFRT-})$) associated with the point (N1) and to control the activation of the acquisition carried out by the computer (CALC) through an acquisition activation signal ($V_{TRIG}$) generated from at least these two spectral components so as to deactivate the acquisition operation during the transient state.

2. The characterisation device (D1) according to claim 1, wherein the computer (CALC) is configured to determine an amplitude and/or phase hysteresis curve associated with the point (N1) based on the measurement signal ($V_s$) during an acquisition operation.

3. The characterisation device (D1) according to any of claims 1 or 2, wherein, when the stability detection step (22) also receives the spectral component of the measurement signal $V_s(f_1)$ associated with the point (N1), the stability detection step (22) is configured to carry out the following operations for said point (N1):

- measure the variation of the first frequency ($f_1$) over time;
- activate the acquisition operation by the computer (CALC) when the first frequency ($f_1$) is stabilised at a value that is substantially equal to the resonant frequency ($f_0$).

4. The characterisation device (D1) according to claim 3, wherein the stability detection step (22) is configured to further carry out the following operations for said point (N1):

- measure the variation of the amplitude of the measurement signal ($V_s$) over time;
- activate the acquisition operation by the computer (CALC) when:

  o the first frequency ($f_1$) is stabilised at a value that is substantially equal to the resonant frequency ($f_0$);
  o and the variation of the measurement signal ($V_s$) is less than a first predetermined threshold.

5. The characterisation device (D1) according to any one of claims 1 to 4, wherein the stability detection step (22) is further configured to deactivate the acquisition operation when the conductive tip (P1) is spaced apart from the upper surface (S1).

6. The characterisation device (D1) according to any one of claims 1 to 5, wherein the control circuit (20) comprises a first filter (FIL1) intended to extract the second spectral component ($V_s(f_{DFRT+})$) and a second filter (FIL2) intended to extract the third spectral component ($V_s(f_{DFRT-})$).

7. The characterisation device (D1) according to claim 6, wherein the control circuit (20) comprises a regulator (PID) for generating the control signal ($V_{cont}$) so as to maintain equality between the amplitude of the second spectral component ($V_s(f_{DFRT+})$) and that of the third spectral component ($V_s(f_{DFRT-})$) during the steady state following the transient state.

8. The characterisation device (D1) according to any one of claims 5 to 7, wherein the stability detection step (22) comprises a divider circuit (221) configured to compute the absolute value of the relative difference ($V_{DIV}$) between:

- on the one hand, the amplitude of the second spectral component ($V_s(f_{DFRT+})$);

- and on the other hand, the amplitude of the third spectral component ($V_s(f_{DFRT-})$).

9. The characterisation device (D1) according to claim 8, wherein the stability detection step (22) further comprises an acquisition activation circuit (222) configured to:

- compare the absolute value of the relative difference ($V_{DIV}$) with a second predetermined threshold;
- generate the acquisition activation signal ($V_{TRIG}$) towards the computer (CALC) when the absolute value of the relative difference ($V_{DIV}$) is less than the second predetermined threshold.

CALC

$V_{TRIG}$

21

SL1

Amp1

PD1

A1

$V_S$

$V_{SPD}$

P1

L1

$V_S (f_{DFRT+})$

N1

S1

$V_{cont}$

$V_{ST} (t)$

PZ1

E1

G1

EL1

$V_S (f_{DFRT-})$

20

22

D1

EP 4 382 918 B1

FIG.1

(301)

(302)

FIG.2a

FIG.2b

$V_S$ ($f_{DFRT+}$, $f_1$, $f_{DFRT-}$)

FIL1

FIL2

$V_S$ ($f_{DFRT+}$)

$V_S$ ($f_{DFRT-}$)

COMP

$V_{cont}$

G1

PID

20

EP 4 382 918 B1

FIG.3a

FIG.3b

EP 4 382 918 B1

FIG.4a

EP 4 382 918 B1

FIG.4b

FIG.4c

FIG.5a

FIG.5b

FIG.6

FIG.7a

FIG.7b

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **MIAO HONGCHEN et al.** Piezoelectricity and ferroelectricity of cellular polypropylene electrets films characterized by piezoresponse force microscopy. *JOURNAL OF APPLIED PHYSICS*, vol. 116 (6), 066820-1, 066820-8